# EUROPEAN PATENT SPECIFICATION

(11) **EP 3 760 964 B1**
(45) Date of publication and mention of the grant of the patent: **24.11.2021**
(21) Application number: 19382570.0
(22) Date of filing: 04.07.2019
(51) Int. Cl.: G01B 3/28, G01B 5/18, G01B 5/28, G01B 7/26, G01B 7/34

(54) **DEVICE FOR THE INSPECTION OF RIVETED SURFACES**
VORRICHTUNG ZUR INSPEKTION VON GENIETETEN OBERFLÄCHEN
DISPOSITIF D'INSPECTION DE SURFACES RIVETÉES

(43) Date of publication of application: 06.01.2021
(73) Proprietor: Airbus Operations, S.L., 28906 Getafe (ES)
(72) Inventor: LOPEZ BUSTOS, Angel, 28906 Getafe (ES)

(56) References cited:
- US-A- 3 170 243
- US-A- 5 189 808
- US-A1- 2009 320 310

## Description

### Object of the invention

The present invention refers to a device intended for the inspection of riveted surfaces in an aircraft in order to detect whether a flush rivet is properly installed.

One object of the invention is to provide a portable device adapted to quickly detect whether a flush rivet is properly installed or whether it has to be removed and reinstalled.

Another object of the invention is to provide a simple device to be easily used by an operator in a production line of an industry, such as in the aviation industry.

### Background of the invention

Flush rivets (countersunks) are broadly used on aerodynamic surfaces when the drag due to the boundary layer separation has to be reduced. When this type of rivets are correctly set, a continuous and smooth riveted surface is provided, leading to a better attachment of the boundary layer.

As a general rule, a flush rivet does not accomplish its function when is located either above or below the surface level. Outside of an acceptable tolerance range, they tend to generate an increase of the drag in the airstream.

Nowadays, a dial gauge is extensively utilized when it comes to inspecting riveted surfaces in aeronautical components. This tool is intended for measuring small distances, from 0.25mm to 300mm. It consists of a dial and a needle, having the dial usually a clockwork. The dial gauge measures changes in distance with respect to a reference, showing the distance that the retractile needle goes inside the dial gauge. It can be used for measuring flatness, but it is necessary to always have a proper hold element, (able to maintain the dial gauge always at the exact same position), and making the measuring more difficult. Additionally, the use of a dial gauge requires experience since the operator needs to know how the measurement is displayed on the dial, and its associated error in order to obtain an accurate and reliable measurement.

It would therefore be desirable to provide a new device that is simpler, cheaper, and with a more intuitive design that facilitates its use to the operator.

Concerning the prior art, US 5,189,808 A discloses a gauge for measuring the depth of a hole countersunk in a workpiece for a fastener, or for measuring the protrusion height of a fastener head above the surface of the workpiece. US 2009/0320310 A1 discloses gauges for measuring the depth of dents. US 3,170,243 A discloses a tire gauge for measuring the depth of a tire tread.

### Summary of the invention

The present invention overcomes the above mentioned drawbacks by providing a portable device not as complex as the dial gauge, with a more competitive manufacturing and with the capacity to be effortless carried to the piece to be tested.

The present invention refers to an inspection device for riveted surfaces that comprises:
- an elongated casing having an upper end and a lower end, the lower end having a flat base containing a hole,
- an elongated tracker movably mounted within the casing, and having an inner end and an outer end,
- a reference element movably mounted within the casing, and having a reference end,
- an indicator element, and
- an electric circuit being in electric contact with the tracker, the reference element, and the indicator element.

The tracker is mounted to be movably between two extreme positions: a tracker resting position, in which the outer end of the tracker is mounted so as to project through the hole of the casing beyond the plane defined by the flat base of the lower end of the casing, and a tracker working position, in which the outer end of the tracker is at least at one position in which said outer end of the tracker is flush to the plane defined by the flat base of the lower end of the casing.

Additionally, the circuit is configured to activate the indicator element when during the working position, the distance between the outer end of the tracker and the reference end of the reference element is greater than a predefined value.

The device is thus configured to discriminate between a properly installed flush rivet - within the acceptable tolerance range - and an improperly installed rivet -where the surface of the piece and the highest/lowest part of the rivet head is out of the acceptable tolerance range-.

This device is simple and portable, easy to be carried by the operator to the piece to be inspected. Further, the device can be used in all kind of pieces, also in already mounted pieces.

Also, the device is easy to use, offering a visual interface to the operator indicating by a colour code if the rivet is properly or improperly installed. This makes the inspection process faster and reduces the lead time associated to the inspected piece.

### Brief description of the drawings

For a better comprehension of the invention, the following drawings are provided for illustrative and non-limiting purposes, wherein:
Figure 1 shows a schematic view of the inspection device for riveted surfaces, according to a first embodiment of the invention.
Figure 2 shows a schematic view of the inspection device for riveted surfaces, according to a second embodiment of the invention.
Figure 3 shows a perspective view of the inspection device for riveted surfaces, according to a third embodiment of the invention.

### Preferred embodiments of the invention

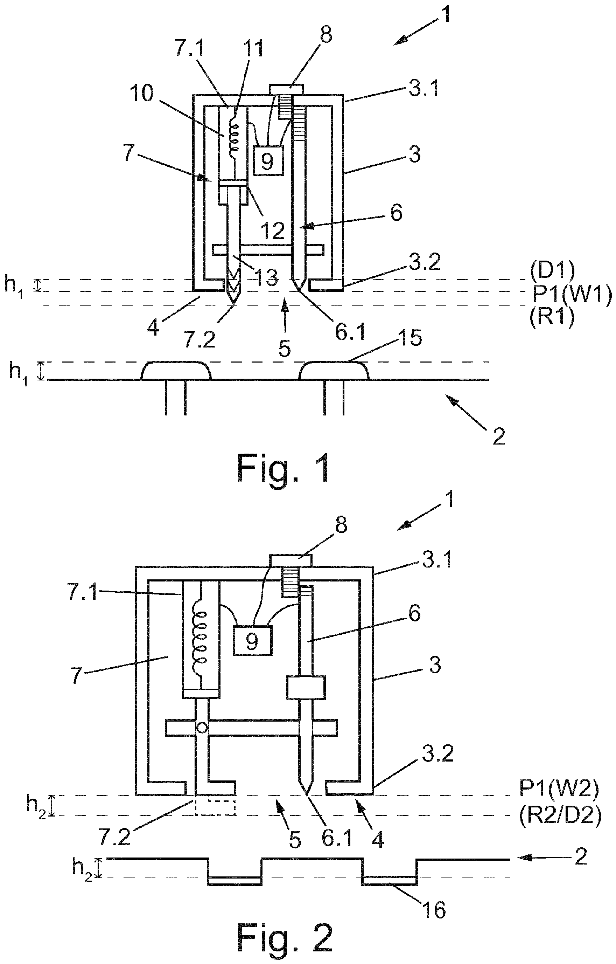

Figures 1 and 2 show different embodiments for inspection devices (1). Figure 1 shows a device (1) specially adapted for detecting protruding rivet heads (15), while Figure 2 shows a device (1) specially adapted for sunken rivet heads (16).

Both inspection devices (1) comprises an elongated casing (3) housing the components of the device (1), having an upper end (3.1) and a lower end (3.2), the lower end (3.2) having a flat base (4) incorporating a hole (5). The casing (3) protects the components of the device (1) and serves as support for tracking a surface (2) looking for flush rivets (15, 16) to be inspected.

The device (1) holds an elongated tracker (7), a reference element (6), an indicator element (8), and an electric circuit (9) being in electric contact with the tracker (7), the reference element (6), and the indicator element (8).

The elongated tracker (7) has an inner end (7.1) and an outer end (7.2), and is movably mounted within the casing (3) between two extreme positions,
- a tracker resting position (R1, R2), in which the outer end of the tracker (7.2) is mounted so as to project through the hole (5) of the casing beyond the plane (P1) defined by the flat base (4) of the lower end of the casing (3.2), and
- a tracker working position (W1, W2), in which the outer end of the tracker (7.2) is at least at one position being flush to the plane (P1) defined by the flat base (4) of the lower end of the casing (3.2).

According to the invention, the reference element (6) has a reference end (6.1) movably mounted within the casing (3), and the circuit (9) is configured to activate the indicator element (8) when during the working position (W1, W2), the distance between the outer end of the tracker (7.2) and the reference end (6.1) of the reference element (6) is greater than a predefined value.

As shown in Figure 1, the electric circuit (9) is configured to provide a detection position (D1) in which the tracker (7) is retracted so that the outer end of the tracker (7.2) is hidden within the casing (3) -above the plane (P1) defined by the flat base (4) of the lower end of the casing (3.2)-, and wherein said retraction surpasses the distance (h1) associated to the predefined value in which the circuit (9) triggers the presence of a rivet out of the acceptable tolerance range, which, in this case, corresponds with a protrusion rivet head (15).

Alternatively, in Figure 2, the electric circuit (9) is configured to provide a detection position (D2) in which the tracker (7) is expanded so that the outer end of the tracker (7.2) is outwardly projected through the hole (5) of the casing (3), wherein said expansion surpasses the distance (h2) associated to the predefined value in which the circuit (9) triggers the presence of a rivet out of the acceptable tolerance range, which, in this case, corresponds with a sunken rivet head (16).

According to a preferred embodiment, the inner end of the tracker (7.1) comprises a compression spring (11) attached to an inner surface of the casing (3), wherein said compression spring (11) has a length such that in a resting position the outer end of the tracker (7.2) is projected through the casing hole (5).

The elongated tracker (7) comprises a cylinder (10) housing a spring (11) having an upper end attached to the casing (3) and a lower end attached to a plate (12) working as a piston inside the cylinder (10), and a metallic needle (13) attached to the plate (12) and ending in a pointed end (7.2).

The cylinder (10), fixed to an upper surface of the casing (3), restricts the movement of the metallic needle (13) to a single degree of freedom, while the plate (12) delimits the distance that the tracker (7) can advance. In this way, a vertical movement can only be performed, and said movement can only be caused by the surface irregularities received by the tracker (7).

According to another preferred embodiment, the reference element (6) is adjustably mounted on the casing (3) to vary the predefined value on which the indicator element (8) is activated.

Thus, the reference element (6) incorporates a calibration part configured to move it in the longitudinal direction and establish the reference point (the reference end (6.1)) at a desired position. As shown in Figures 1 and 2, the reference element (6) has a threaded end to set the reference end (6.1) at the desired position, which will be preferably contained in the plane (P1) defined by the flat base (4) of the lower end of the casing (3.2).

According to another preferred embodiment, the indicator element (8) is a LED to provide visual indication in order to inform whether the distance between the outer end of the tracker (7.2) and the reference end (6.1) of the reference element (6) is out of the acceptable tolerance range.

Preferably, the LED has a threaded end and the reference element (6) has a threaded end (6.2), so that the reference element (6) and the indicator element (8) are threaded one to another to establish the predefined value on which the indicator element (8) is activated.

As mentioned, Figure 2 shows an inspection device (1) specially adapted for sunken rivet heads (16). This device configuration is the same as of the Figure 1 - specially adapted for detecting protruding rivet heads (15)- apart from the electric circuit (9) which will be configured to provide a different detection position (D2) in order to allow the detection of sunken rivet heads (16).

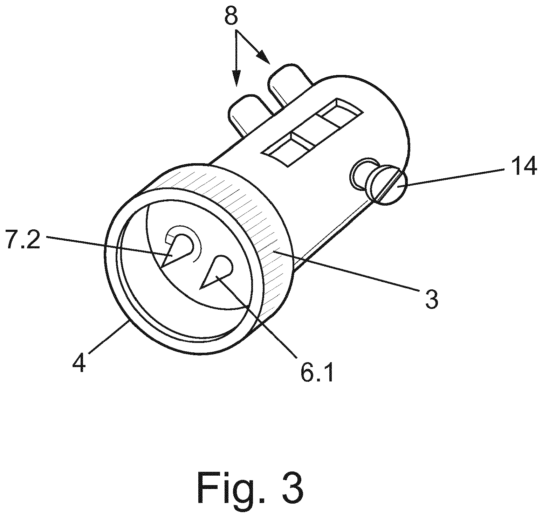

Figure 3 shows a perspective view of the inspection device (1) in which the outer end of the tracker (7.2) and reference end (6.1) of the reference element (6) protrudes from the lower end of the casing (3.2). As shown, the device (1) may comprise a drive screw (14) to set the reference end (6.1) at the desired position. Further, the device (1) may comprise a pair of indicators (8), preferably red and green LEDs in order to indicate whether the flush rivet (2) is adequately positioned (green light) or not (red light).

## Claims

1. An inspection device (1) for riveted surfaces (2) comprising:
- an elongated casing (3), having an upper end (3.1) and a lower end (3.2), the lower end (3.2) having a flat base (4) containing a hole (5),
- an elongated tracker (7) movably mounted within the casing (3), and having an inner end (7.1) and an outer end (7.2),
- a reference element (6) movably mounted within the casing (3), and having a reference end (6.1),
- an indicator element (8),
- and, an electric circuit (9) being in electric contact with the tracker (7), the reference element (6), and the indicator element (8),
wherein the tracker (7) is mounted to be movably between two extreme positions,
- a tracker resting position (R1, R2), in which the outer end of the tracker (7.2) is mounted so as to project through the hole (5) of the casing beyond the plane (P1) defined by the flat base (4) of the lower end of the casing (3.2),
- and a tracker working position (W1, W2), in which the outer end of the tracker (7.2) is at least at one position being flush to the plane (P1) defined by the flat base (4) of the lower end of the casing (3.2),
and wherein the circuit (9) is configured to activate the indicator element (8) when during the working position (W1, W2), the distance between the outer end of the tracker (7.2) and the reference end (6.1) of the reference element (6) is greater than a predefined value.

2. An inspection device (1) for riveted surfaces (2), according to claim 1, wherein the electric circuit (9) is configured to provide a detection position (D1) in which the tracker (7) is retracted so that the outer end of the tracker (7.2) is hidden within the casing (3).

3. An inspection device (1) for riveted surfaces (2), according to claim 1, wherein the electric circuit (9) is configured to provide a detection position (D2) in which the tracker (7) is expanded so that the outer end of the tracker (7.2) is outwardly projected through the hole (5) of the casing (3).

4. An inspection device (1) for riveted surfaces (2), according to any preceding claims, wherein the inner end of the tracker (7.1) comprises a compression spring (11) attached to an inner surface of the casing (3), said compression spring (11) having a length such that in a resting position the outer end of the tracker (7.2) is projected through the casing hole (5).

5. An inspection device (1) for riveted surfaces (2), according to any preceding claims, wherein the reference element (6) is adjustably mounted on the casing (3) to vary the predefined value on which the indicator element (8) is activated.

6. An inspection device (1) for riveted surfaces (2), according to any preceding claims, wherein the indicator element (8) is a LED having a threaded end, the reference element (6) has a threaded end (6.2), and wherein both the reference element (6) and the indicator element (8) are threaded one to another to establish the predefined value on which the indicator element (8) is activated.

## Patentansprüche

1. Inspektionsvorrichtung (1) für genietete Oberflächen (2), umfassend:
- ein längliches Gehäuse (3) mit einem oberen Ende (3.1) und einem unteren Ende (3.2), wobei das untere Ende (3.2) eine flache Basis (4) aufweist, die ein Loch (5) enthält,
- einen länglichen Nachführer (7), der beweglich innerhalb des Gehäuses (3) montiert ist und ein inneres Ende (7.1) und ein äußeres Ende (7.2) aufweist,
- ein Referenzelement (6), das beweglich im Gehäuse (3) montiert ist und ein Referenzende (6.1) aufweist,
- ein Anzeigeelement (8),
- und eine elektrische Schaltung (9), die in elektrischem Kontakt mit dem Nachführer (7), dem Referenzelement (6) und dem Anzeigeelement (8) steht,
wobei der Nachführer (7) so montiert ist, dass er zwischen zwei Extrempositionen beweglich ist,
- eine Ruheposition (R1, R2) des Nachführers, bei der das äußere Ende des Nachführers (7.2) so montiert ist, dass es durch das Loch (5) des Gehäuses über die Ebene (P1) hinausragt, die durch die flache Basis (4) des unteren Endes des Gehäuses (3.2) definiert ist,
- und eine Arbeitsposition (W1, W2) des Nachführers, bei der das äußere Ende des Nachführers (7.2) zumindest in einer Position bündig mit der Ebene (P1) ist, die durch die flache Basis (4) des unteren Endes des Gehäuses (3.2) definiert ist,
und wobei die Schaltung (9) dafür ausgelegt ist, das Anzeigeelement (8) zu aktivieren, wenn während der Arbeitsposition (W1, W2) der Abstand zwischen dem äußeren Ende des Nachführers (7.2) und dem Referenzende (6.1) des Referenzelements (6) größer als ein vordefinierter Wert ist.

2. Inspektionsvorrichtung (1) für genietete Oberflächen (2) nach Anspruch 1, wobei die elektrische Schaltung (9) dafür ausgelegt ist, eine Erfassungsposition (D1) bereitzustellen, bei der der Nachführer (7) zurückgezogen ist, so dass das äußere Ende des Nachführers (7.2) innerhalb des Gehäuses (3) verborgen ist.

3. Inspektionsvorrichtung (1) für genietete Oberflächen (2) nach Anspruch 1, wobei die elektrische Schaltung (9) dafür ausgelegt ist, eine Erfassungsposition (D2) bereitzustellen, bei der der Nachführer (7) ausgefahren ist, so dass das äußere Ende des Nachführers (7.2) durch das Loch (5) des Gehäuses (3) nach außen ragt.

4. Inspektionsvorrichtung (1) für genietete Oberflächen (2) nach einem der vorhergehenden Ansprüche, wobei das innere Ende des Nachführers (7.1) eine Druckfeder (11) umfasst, die an einer Innenfläche des Gehäuses (3) befestigt ist, wobei die Druckfeder (11) eine solche Länge aufweist, dass in einer Ruheposition das äußere Ende des Nachführers (7.2) durch das Gehäuseloch (5) ragt.

5. Inspektionsvorrichtung (1) für genietete Oberflächen (2) nach einem der vorhergehenden Ansprüche, wobei das Referenzelement (6) verstellbar am Gehäuse (3) montiert ist, zu dem Zweck, den vordefinierten Wert zu verändern, bei dem das Anzeigeelement (8) aktiviert wird.

6. Inspektionsvorrichtung (1) für genietete Oberflächen (2) nach einem der vorhergehenden Ansprüche, wobei das Anzeigeelement (8) eine LED mit einem Gewindeende ist, das Referenzelement (6) ein Gewindeende (6.2) aufweist, und wobei sowohl das Referenzelement (6) als auch das Anzeigeelement (8) miteinander verschraubt sind, zu dem Zweck, den vordefinierten Wert festzulegen, bei dem das Anzeigeelement (8) aktiviert wird.

## Revendications

1. Dispositif d'inspection (1) pour surfaces rivetées (2) comprenant :
- un logement allongé (3), ayant une extrémité supérieure (3.1) et une extrémité inférieure (3.2), l'extrémité inférieure (3.2) ayant une base plate (4) contenant un trou (5),
- un dispositif de suivi allongé (7) monté de façon mobile à l'intérieur du logement (3), et ayant une extrémité interne (7.1) et une extrémité externe (7.2),
- un élément de référence (6) monté de façon mobile à l'intérieur du logement (3), et ayant une extrémité de référence (6.1),
- un élément indicateur (8),
- et, un circuit électrique (9) en contact électrique avec le dispositif de suivi (7), l'élément de référence (6), et l'élément indicateur (8),
le dispositif de suivi (7) étant monté de façon à être mobile entre deux positions extrêmes,
- une position de repos de dispositif de suivi (R1, R2), dans laquelle l'extrémité externe du dispositif de suivi (7.2) est montée de sorte à faire saillie à travers le trou (5) du logement au-delà du plan (P1) défini par la base plate (4) de l'extrémité inférieure du logement (3.2),
- et une position de travail de dispositif de suivi (W1, W2), dans laquelle l'extrémité externe du dispositif de suivi (7.2) est au moins à une position affleurant le plan (P1) défini par la base plate (4) de l'extrémité inférieure du logement (3.2),
et le circuit (9) étant configuré pour activer l'élément indicateur (8) durant la position de travail (W1, W2), la distance entre l'extrémité externe du dispositif de suivi (7.2) et l'extrémité de référence (6.1) de l'élément de référence (6) étant supérieure à une valeur prédéfinie.

2. Dispositif d'inspection (1) pour surfaces rivetées (2), selon la revendication 1, où le circuit électrique (9) est configuré pour fournir une position de détection (D1) dans laquelle le dispositif de suivi (7) est rétracté de sorte que l'extrémité externe du dispositif de suivi (7.2) soit cachée à l'intérieur du logement (3).

3. Dispositif d'inspection (1) pour surfaces rivetées (2), selon la revendication 1, où le circuit électrique (9) est configuré pour fournir une position de détection (D2) dans laquelle le dispositif de suivi (7) est déployé de sorte que l'extrémité externe du dispositif de suivi (7.2) soit projetée vers l'extérieur à travers le trou (5) du logement (3).

4. Dispositif d'inspection (1) pour surfaces rivetées (2), selon l'une quelconque des revendications précédentes, où l'extrémité interne du dispositif de suivi (7.1) comprend un ressort de compression (11) attaché à une surface interne du logement (3), ledit ressort de compression (11) ayant une longueur telle que, dans une position de repos, l'extrémité externe du dispositif de suivi (7.2) soit projetée à travers le trou de logement (5).

5. Dispositif d'inspection (1) pour surfaces rivetées (2) selon l'une quelconque des revendications précédentes, où l'élément de référence (6) est monté de façon réglable sur le logement (3) pour faire varier la valeur prédéfinie à laquelle l'élément indicateur (8) est activé.

6. Dispositif d'inspection (1) pour surfaces rivetées (2), selon l'une quelconque des revendications précédentes, où l'élément indicateur (8) est une DEL ayant une extrémité filetée, l'élément de référence (6) a une extrémité filetée (6.2), et où à la fois l'élément de référence (6) et l'élément indicateur (8) sont vissés l'un à l'autre pour établir la valeur prédéfinie à laquelle l'élément indicateur (8) est activé.
